# FASCICULE DE BREVET EUROPEEN

(11) **EP 3 654 499 B1**
(45) Date de publication et mention de la délivrance du brevet: **13.05.2026**
(21) Numéro de dépôt: 20151070.8
(22) Date de dépôt: 02.02.2018
(51) Int. Cl.: H02K 9/06, H02K 3/52, H02K 5/173, H02K 5/22, H02K 11/04

(54) **MACHINE ÉLECTRIQUE TOURNANTE MUNIE D'ÉLÉMENTS D'OBTURATION LIMITANT UN REBOUCLAGE D'AIR CHAUD**
ELEKTRISCH UMLAUFENDE MASCHINE, DIE MIT ABDICHTUNGSMITTELN AUSGESTATTET IST, DIE EINE RÜCKFÜHRUNG VON HEISSER LUFT BEGRENZEN
ROTARY ELECTRICAL MACHINE PROVIDED WITH SEALING ELEMENTS LIMITING HOT AIR FEEDBACK

(30) Priorité: 03.02.2017 FR 1750939
(43) Date de publication de la demande: 20.05.2020
(62) Demande divisionnaire de: 18154931.2
(73) Titulaire: Valeo Electrification, 95800 Cergy (FR)
(72) Inventeur: BEN OMRANE, Ryadh, 94046 CRETEIL CEDEX (FR); MONTEIL, Christophe, 94046 CRETEIL CEDEX (FR); BOUSSICOT, Frédéric, 94046 CRETEIL CEDEX (FR)
(74) Mandataire: Valeo Powertrain Systems

(56) Documents cités:
- WO-A1-2016/063337
- DE-A1- 102007 034 325
- DE-A1- 102013 212 041
- JP-B2- 5 368 532
- US-A- 5 089 735
- US-A1- 2014 203 675
- US-A1- 2015 084 447

## Description

L'invention porte sur une machine électrique tournante munie d'éléments d'obturation limitant un rebouclage d'air chaud. L'invention trouve une application particulièrement avantageuse, mais non exclusive, avec les machines électriques tournantes fonctionnant au moins en mode alternateur.

De façon connue en soi, les machines électriques tournantes comportent un stator et un rotor solidaire d'un arbre. Le stator et le rotor sont montés dans un carter configuré pour porter à rotation l'arbre sur des paliers par l'intermédiaire de roulements. Le rotor peut être un rotor à griffe comportant deux roues polaires et un noyau autour duquel est enroulée une bobine d'excitation. Dans un autre exemple, le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un module électronique de puissance comportant notamment un pont redresseur et, le cas échéant onduleur, dans le cas d'un alterno-démarreur.

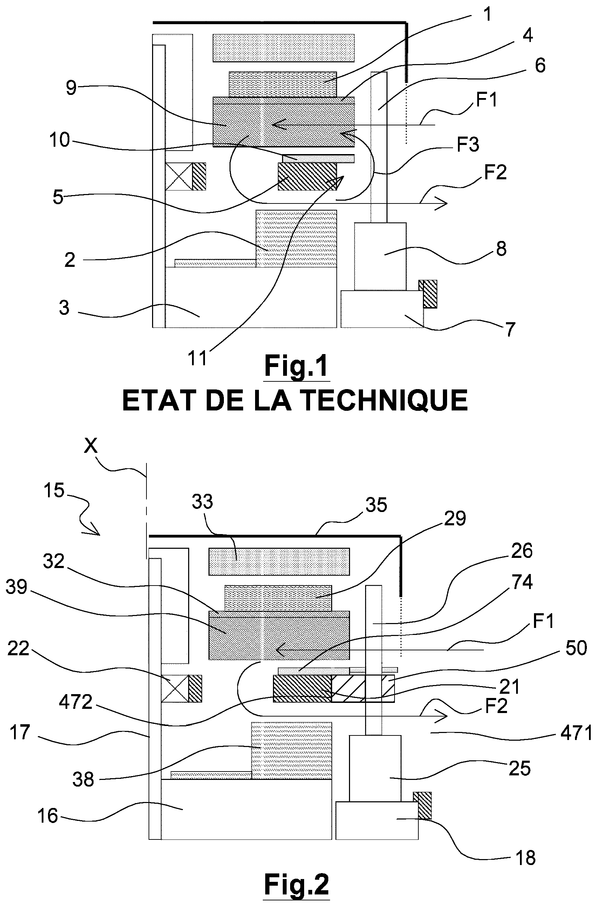

Comme cela est illustré sur la figure 1, afin de refroidir le module électronique de puissance 1, un ventilateur 2, fixé sur le rotor 3 de la machine, permet de créer un courant d'air entrant latéralement via la flèche F1 à l'intérieur d'un passage défini par la face du dissipateur thermique 4 tournée vers le palier 5 et la face supérieure du palier 5 tournée vers le dissipateur 4 puis est refoulé latéralement vers l'extérieur de la machine électrique suivant la flèche F2.

L'air à la sortie du ventilateur 2 lèche le chignon de bobinage 8 puis les sorties de phase 6 du stator 7 et s'échauffe. Une partie de cet air est réaspirée dans la machine suivant la flèche F3 au lieu de s'évacuer vers l'extérieur. Ainsi, la température d'air à proximité des ailettes 9 du dissipateur 4 est plus élevée, ce qui diminue les capacités de refroidissement de la machine.

Il est connu de monter un dispositif anti-rebouclage de flux 10 entre le dissipateur thermique 4 et le palier 5 afin de diminuer le rebouclage d'air chaud au niveau des ouvertures 11 axiales du palier permettant le passage des sorties de phase 6.

Du fait de l'évolution de la configuration de la machine électrique, il a été nécessaire d'implanter des terminaux sur les sorties de phase 6 pour leur fixation sur le module électronique de puissance 1. Cela a engendré l'augmentation de la taille des ouvertures 11 correspondantes ménagées dans le palier 5 et donc une augmentation du flux de rebouclage d'air chaud en direction de l'électronique de puissance. Le dispositif 10 ne permet pas de limiter ce flux de rebouclage, dans la mesure où il est nécessaire qu'il dispose lui-même de trous importants pour le passage des sorties de phase 6 lors du procédé de montage de la machine électrique.

Le document FR2978885 décrit une machine électrique tournante comportant des cheminées insérées dans les ouvertures du palier pour permettre un guidage et une isolation électrique des sorties de phase. En outre, le document WO2016/063337 décrit un dispositif d'étanchéité s'étendant à partir de l'ensemble électronique et venant s'insérer dans des ouvertures du palier. Le document DE 10 2007 034325 A1 décrit un alternateur comprenant des pièces de connexions électriques de phases venant en regard d'ouvertures du palier. JP 5 368532 B2 et US 2014/203675 A1 sont des arts antérieurs illustrant l'état de la technique.

L'invention vise à remédier efficacement à cet inconvénient en proposant une machine électrique tournante selon la revendication 1.

L'invention permet ainsi, grâce à l'utilisation du ou des éléments d'obturation, d'assurer un blocage de l'air chaud issu du rotor, tout en permettant de mettre en œuvre une configuration dans laquelle les sorties de phase sont associées à des terminaux. En effet, le ou les éléments d'obturation pourront être fixés sur le palier après que les sorties de phase et les terminaux associés aient traversés les ouvertures du palier. En outre, du fait du positionnement de l'élément d'obturation au moins en partie à l'intérieur de l'ouverture du palier correspondante, l'invention permet d'assurer la fonction de blocage de flux sans augmenter la longueur axiale totale de la machine électrique tournante.

Selon une réalisation, ledit élément d'obturation s'étend totalement dans l'épaisseur de l'ouverture correspondante.

Selon une réalisation, l'élément d'obturation comporte des moyens d'encliquetage avec le palier.

Selon une réalisation, les moyens d'encliquetage comportent au moins une patte élastiquement déformable destinée à venir se loger dans un logement ménagé dans une face du palier.

Selon une réalisation, les moyens d'encliquetage comportent deux pattes issues chacune d'une face d'extrémité dudit élément d'obturation de manière opposée l'une de l'autre.

Selon une réalisation, les moyens d'encliquetage comportent deux pattes issues chacune d'une face d'extrémité longitudinale dudit élément d'obturation.

L'élément d'obturation comporte des faces latérales chanfreinées.

L'élément d'obturation comporte une paroi de base de laquelle sont issus au moins deux bras délimitant un espace de passage de la sortie de phase.

Selon une réalisation, l'espace de passage est ouvert du côté opposé à la paroi de base de l'élément d'obturation.

Selon une réalisation, l'élément d'obturation comporte au moins trois bras, deux bras consécutifs délimitant un espace de passage d'une sortie de phase.

Selon une réalisation, l'élément d'obturation comporte des rainures de rigidification.

Selon une réalisation, l'élément d'obturation est réalisé dans un matériau plastique.

Selon une réalisation, un dispositif anti-rebouclage de flux est positionné entre le palier et un dissipateur thermique.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, représente une vue en coupe partielle de la partie arrière d'une machine électrique tournante munie d'un dispositif anti-rebouclage de flux selon l'état de la technique ;
La figure 2 représente une vue en coupe partielle de la partie arrière d'une machine électrique tournante munie d'éléments d'obturation selon un exemple de réalisation de la présente invention ;
La figure 3 est une vue en perspective illustrant le montage des éléments d'obturation dans les ouvertures correspondantes du palier arrière de la machine électrique tournante selon un exemple de réalisation de l'invention ;
Les figures 4a à 4c sont des vues illustrant le montage d'un élément obturation selon l'exemple de la figure 3 dans une ouverture correspondante du palier ;
La figure 5a est une vue en perspective et en coupe illustrant un exemple de positionnement d'un élément d'obturation à l'intérieur d'une ouverture du palier correspondante ;
La figure 5b est une vue en coupe illustrant le positionnement des pattes de l'élément d'obturation de I figure 5a à l'intérieur d'un logement correspondant ménagé dans le palier arrière de la machine électrique tournante selon l'invention ;
Les figures 6a et 6b sont des vues en perspective illustrant le montage d'une variante de réalisation d'un élément d'obturation selon l'invention comportant un seul espace de passage de sortie de phase ;
Les figures 7a et 7b sont des vues en perspective illustrant respectivement le montage d'un dispositif anti-rebouclage de flux et du module électronique de puissance de la machine électrique tournante selon l'invention.

Sur les figures 2 à 7, les éléments identiques, similaires, ou analogues conservent la même référence d'une figure à l'autre.

La figure 2 représente une vue en coupe de l'arrière d'une machine électrique tournante 15 apte à fonctionner de manière réversible dans un mode générateur pour fournir une puissance à la batterie et au réseau de bord du véhicule, et dans un mode moteur pour fournir une puissance mécanique au moteur thermique du véhicule afin notamment d'assurer son démarrage.

La machine électrique tournante 15 comporte un rotor 16 monté sur un arbre 17 d'axe X et un stator 18 entourant le rotor 16 avec présence d'un entrefer entre la périphérie externe du rotor 16 et la périphérie interne du stator 18. L'arbre 17 est monté rotatif par rapport au palier arrière 21 comportant à un cet effet un logement pour un roulement 22. Le stator 18 monté fixe dans le palier 21 est muni d'un bobinage induit comportant un chignon 25 s'étendant en saillie axiale par rapport à un corps du stator. Le bobinage comporte, en outre, des sorties de phase 26 qui s'étendent axialement en saillie par rapport au chignon.

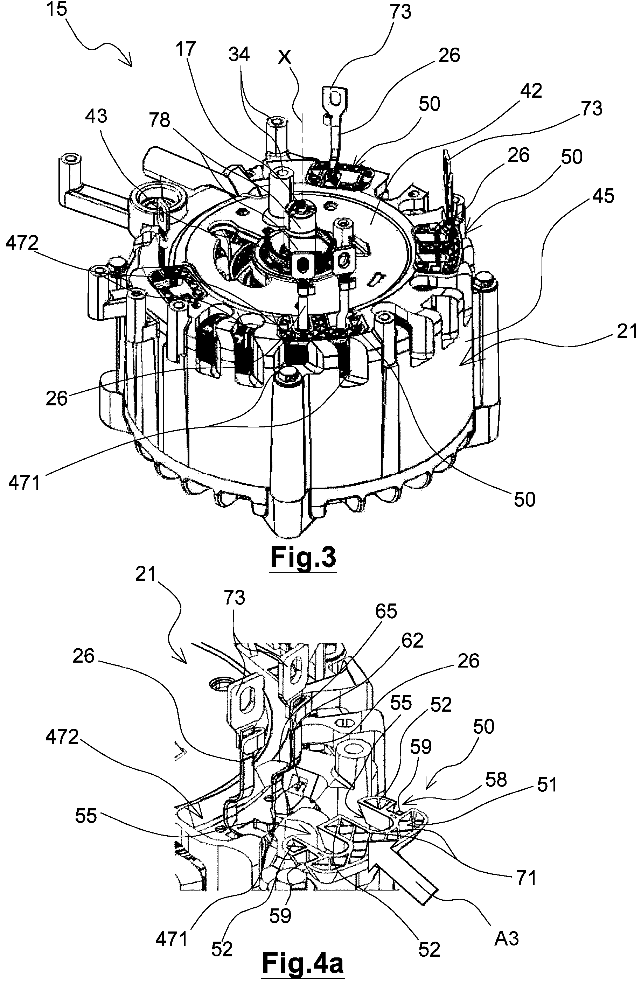

Ces sorties de phase 26 sont reliées électriquement à un module électronique de puissance 29, la liaison électrique n'étant pas représentée sur les figures. Le module électronique de puissance 29 comporte un pont redresseur et onduleur, par exemple à transistors de puissance de type MOS. Dans l'exemple décrit ici, ce module électronique de puissance 29 est monté sur la face supérieure d'un dissipateur de chaleur 32, la face supérieure étant la face opposée axialement à la face dudit dissipateur qui est en regard du palier 21. Ce module électronique de puissance 29 est associé à un module électronique de commande 33. Le module électronique de puissance 29 et le dissipateur 32 forment une mezzanine au-dessus du palier 21. La mezzanine est fixée sur le palier 21 au moyen de colonnes de fixation 34 visibles sur la figure 3.

Un capot de protection 35 enveloppe les modules électroniques de puissance 29 et de commande 33 afin de les protéger de l'environnement extérieur.

Afin de refroidir le module électronique de puissance 29, un ventilateur 38, fixé sur le rotor 16 de la machine, permet de créer un courant d'air entrant via la flèche F1 dans l'enceinte de la machine électrique tournante et sortant de ladite enceinte via la flèche F2. Dans cet exemple de réalisation, un passage d'air entrant dans l'enceinte est défini entre la face inférieure du dissipateur 32 tournée vers le palier 21 et la face supérieure dudit palier 21 tournée vers ledit dissipateur 32. D plus, l'air sortant est refoulé latéralement à l'extérieur de l'enceinte entre une face inférieure du palier 21 et le ventilateur 38. Des ailettes 39 issues du dissipateur 32 pourront s'étendre à l'intérieur du passage d'air entrant, de préférence en direction du palier 21.

Alternativement, un passage d'air entrant dans l'enceinte pourrait être défini entre la face supérieure du dissipateur 32 tournée vers le capot 35 et la face inférieure du capot 35 tournée vers ledit dissipateur 32. Les ailettes 39 issues du dissipateur pourrait alors s'étendre en direction du capot 35 et les modules de puissance 29 et/ou le module de commande 33 pourraient s'étendre entre le dissipateur 32 et le palier 21.

Plus précisément ici, le palier 21 visible sur la figure 3 comporte un flasque transversal 42 muni d'un logement central 43 pour le roulement 22. Le flasque 42 est prolongé à sa périphérie externe par un rebord 45 d'orientation axiale. Des ouvertures latérales 471 pour le passage de l'air se trouvent dans le prolongement d'ouvertures axiales 472 permettant le passage des sorties de phase 26 et des terminaux 73 associés pour leur connexion au module électronique de puissance 29.

Des éléments d'obturation 50 sont fixés sur le palier 21 pour obturer au moins partiellement les ouvertures 472. Ces éléments d'obturation 50 s'étendent au moins en partie, de préférence totalement, dans l'épaisseur de l'ouverture 472 correspondante. Une telle configuration permet de ne pas augmenter la longueur axiale de la machine électrique 15. Ces éléments d'obturation 50 permettent d'isoler le flux d'air entrant par rapport au flux d'air sortant de la machine, afin que l'air sortant de la machine électrique tournante 15 ne soit pas réintroduit immédiatement dans la machine électrique 15. On évite ainsi une recirculation importante d'air chaud provenant de l'intérieur de ladite machine 15.

Plus précisément, comme cela est clairement visible sur l'exemple des figures 4a à 4c, les éléments d'obturation 50 comportent chacun une paroi de base 51 de laquelle sont issus trois bras 52 délimitant deux espaces de passage 55 pour deux sorties de phase 26. Les éléments d'obturation 50 présentent ainsi une forme de peigne.

Les bras 52 sont monoblocs avec la paroi de base 51. Les éléments d'obturation 50 pourront être obtenus par exemple par moulage. Les éléments d'obturation 50 pourront être réalisés dans un matériau plastique résistant à des températures supérieures à 150 degrés Celsius. Le matériau plastique pourra, le cas échéant, être chargé par des fibres, telles que des fibres de verre.

Deux bras 52 consécutifs délimitent un espace de passage 55 pour une sortie de phase 26. Chaque espace de passage 55 est ouvert du côté opposé à la paroi de base 51 de l'élément d'obturation 50. Chaque espace de passage 55 permet d'autoriser la mise en place de l'élément d'obturation 50 autour d'une sortie de phase 26 correspondante par un déplacement latéral sans avoir à laisser passer le terminal 73 de grande dimension.

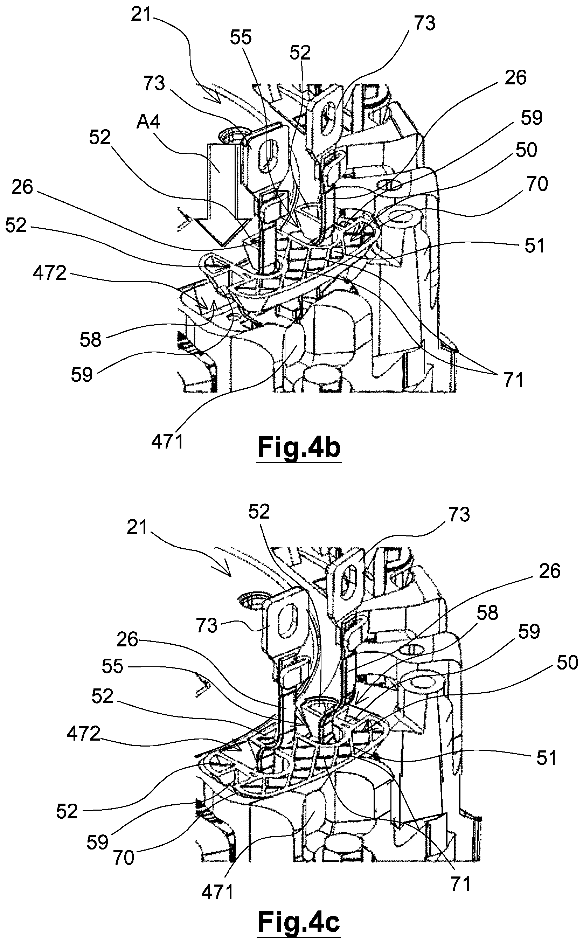

Comme on peut le voir sur la figure 4c, une fois que l'élément d'obturation 50 est mis en place sur le palier 21, les espaces de passage 55 sont fermés par un bord interne du palier 21 délimitant l'ouverture 472 correspondante recevant l'élément 50.

Par ailleurs, la paroi de base 51 est située du côté de la périphérie externe du palier 21. La paroi de base 51 permet de fermer le bord de l'ouverture 472 située dans le prolongement de l'ouverture latérale 471 correspondante. Autrement dit, la paroi de base 51 ferme la partie ouverte de la périphérie externe du palier 21 s'étendant entre les ouvertures 471 et 472. Alternativement, la paroi de base peut être située du côté de la périphérie interne de l'ouverture 472, c'est-à-dire du côté le plus proche de l'axe X de l'ouverture 472. Le sens d'insertion radial de l'élément d'obturation 50 est alors inversé.

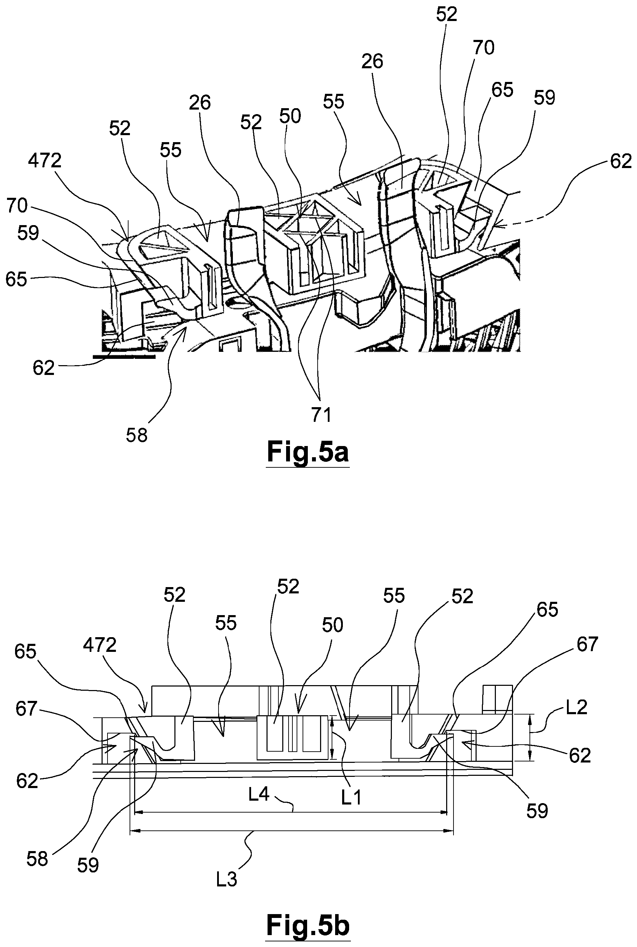

Lorsque l'élément d'obturation 50 est mis en place, la paroi de base 51 et les bras 52 s'étendent dans l'épaisseur de l'ouverture 472 correspondante du palier 21. La paroi de base 51 et les bras 52 présentent donc à cet effet une épaisseur L1 égale ou inférieure à l'épaisseur L2 du palier 21 dans la zone de l'ouverture 472, tel que cela est montré sur la figure 5b.

Afin d'assurer sa fixation sur le palier 21, l'élément d'obturation 50 comporte des moyens d'encliquetage 58 avec le palier 21. Ces moyens d'encliquetage 58, bien visibles sur les figures 5a et 5b, comportent deux pattes 59 élastiquement déformables destinées chacune à venir se loger dans un logement 62 ménagé dans la face inférieure du palier 21 tournée vers le rotor 16.

Les pattes 59 s'étendent, dans cet exemple, dans une direction circonférentielle. Les pattes 59 sont alors issues des parois circonférentielles respectives des bras 52 situés aux extrémités circonférentielles de l'élément d'obturation 50. En variante les pattes 59 peuvent s'étendre dans une direction radiale. Les pattes 59 sont alors issues des parois radiales de l'élément d'obturation 50 et peuvent donc être issus soit des bras 52 soit de la paroi de base 51.

Un écart longitudinal L3 entre les extrémités libres des deux pattes 59 à l'état non contraint est supérieur à l'écart L4 entre les deux rebords d'extrémité 65 de l'ouverture 472 correspondante (cf. figure 5b). Ainsi, lors de l'insertion des éléments d'obturation 50 à l'intérieur des ouvertures 472, les pattes 59 en contact avec les rebords 65 de l'ouverture 472 ont tendance, du fait de leur déformation, à se rapprocher du corps des bras 52 dont ils sont issus puis dès que les pattes 59 ont dépassé axialement les rebords 65, les pattes 59 reprennent leur forme initiale. Les pattes 59 et donc l'élément d'obturation 50 sont alors bloqués verticalement par la face 67 du logement 62 raccordée au rebord 65 de l'ouverture 472 et s'étendant radialement par rapport à l'axe X.

L'élément d'obturation 50 comporte des faces latérales chanfreinées 70 destinées à venir en appui contre les rebords 65 de l'ouverture 472 de forme correspondante, tel que montré sur la figure 5a. De préférence, les faces d'extrémité radiale et les faces d'extrémité circonférentielle de l'élément d'obturation 50 sont chanfreinées. Cela facilite l'insertion et le maintien de l'élément d'obturation 50 dans une ouverture 472 correspondante.

En outre, l'élément d'obturation 50 pourra comporter des rainures de rigidification 71. Ces rainures de rigidification 71 pourront présenter des formes de croisillon, tel que cela est montré notamment sur les figures 4a à 4c.

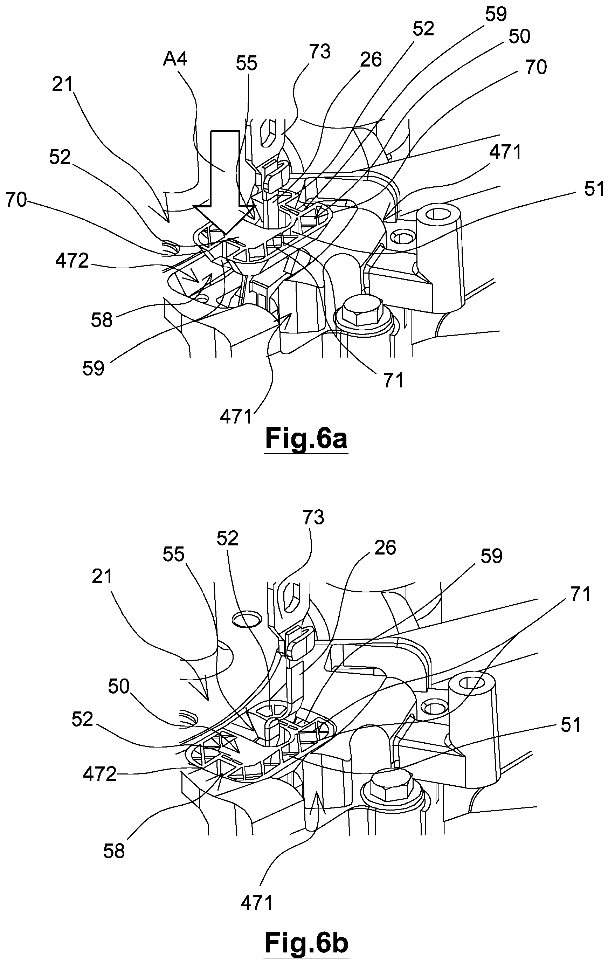

En variante, comme cela est illustré par les figures 6a et 6b, l'élément d'obturation 50 comporte uniquement deux bras 52 issus de la paroi de base 51 définissant un seul espace de passage 55 pour une sortie de phase 26. L'élément d'obturation 50 présente alors une forme en U. En variante, l'élément d'obturation 50 pourra comporter plus de trois bras 52 pour autoriser le passage de plus de deux sorties de phase 26. Cela dépend de l'application et en particulier du nombre et du positionnement des sorties de phase 26 suivant la circonférence du stator 18.

Comme cela est illustré par la figure 4a, les éléments d'obturation 50 sont mis en place dans un premier temps autour des sorties de phase 26 portant des terminaux 73 via leur espace de passage 55 par un déplacement radial suivant la flèche A3 ou, en variante dans le sen opposé de ladite flèche A3.

Puis, les éléments d'obturation 50 sont insérés à l'intérieur des ouvertures 472 correspondantes suivant un déplacement axial selon la flèche A4 jusqu'à ce que les pattes 59 se verrouillent par encliquetage à l'intérieur des logements 62 correspondants, tel que cela est montré sur les figures 4b, 4c, et 6a et 6b. Les éléments d'obturation 50 forment ainsi des bouchons évitant que l'air chaud issu du rotor 16 traverse les ouvertures 472 de passage des sorties de phase 26.

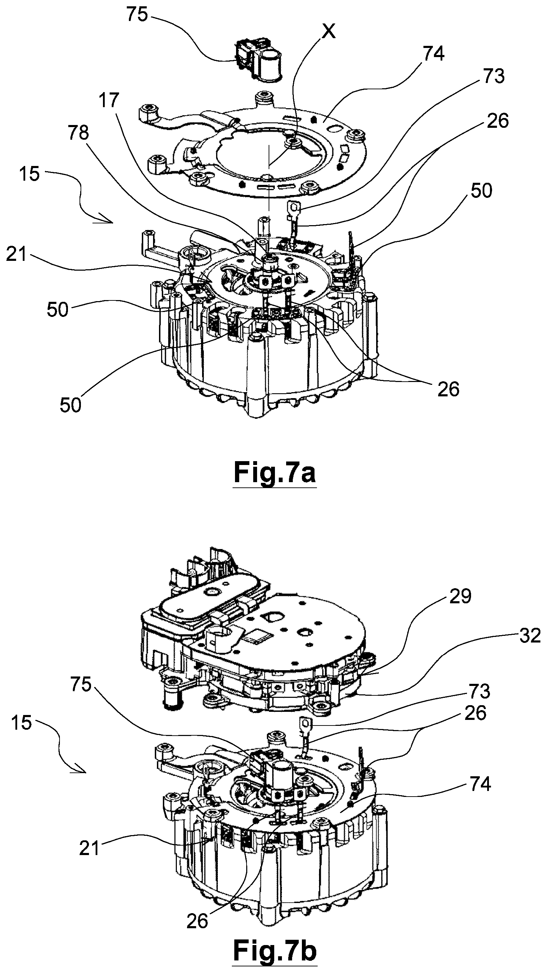

Une fois que les éléments d'obturation 50 ont été mis en place sur le palier 21, une plaque 74 de forme annulaire, formant un dispositif anti-rebouclage de flux d'air, pourra être positionnée contre la face externe du flasque du palier 21 tournée du côté opposé au rotor 16, comme cela est illustré par la figure 7a. La plaque est maintenue en position par serrage entre le palier et le dissipateur thermique 32. La plaque 74 est de préférence formée d'une matière plastique pour permettre une isolation électrique entre le dissipateur thermique 32 et le palier 21.

La plaque 74 comporte des ouvertures permettant le passage des sorties de phase 26 à travers ladite plaque. Ces ouvertures sont par exemple formées entièrement dans la plaque 74 et ne s'étendent pas à partir du pourtour externe de ladite plaque. Cela permet notamment de recouvrir partiellement l'espace de passage 55 formé entre l'élément obturateur et le palier 21 pour le passage de la sortie de phase 26 et ainsi contribue à empêcher le rebouclage de l'air chaud venant du stator vers l'ensemble électronique.

Un porte-balais 75 est ensuite monté autour de l'arbre 17, de sorte que les balais viennent frotter contre des pistes collectrices 78 reliées électriquement au bobinage rotorique.

L'ensemble comportant le dissipateur thermique 32 et le module électronique de puissance 29 est ensuite monté sur le palier arrière 21, comme cela est illustré par la figure 7b. Une fois la machine électrique 15 assemblée, Le dispositif anti-rebouclage de flux 74 est positionné entre le palier 21 et le dissipateur thermique 32, comme cela ressort de la figure 2.

Les éléments d'obturation 50 qui viennent d'être décrits peuvent de façon générale être mis en œuvre dans tout type d'alternateur, comportant notamment un rotor à griffes ou à pôles saillants.

Bien entendu, la description qui précède a été donnée à titre d'exemple uniquement et ne limite pas le domaine de l'invention.

En outre, les différentes caractéristiques, variantes, et/ou formes de réalisation de la présente invention peuvent être associées les unes avec les autres selon diverses combinaisons, pourvu que cela soit compris dans la portée des revendications.

## Revendications

1. Machine électrique tournante (15) comportant :
- un rotor (16) monté sur un arbre (17) d'axe (X),
- un stator (18) entourant le rotor (16) avec présence d'un entrefer entre la périphérie externe du rotor (16) et la périphérie interne du stator (18), le stator ayant un bobinage muni de sorties de phase (26),
- un palier (21) comportant des ouvertures (472) autorisant le passage des sorties de phase (26), et
- un ventilateur (38), fixé sur le rotor (16) de la machine, permet de créer un courant d'air entrant dans l'enceinte de la machine électrique tournante et sortant de ladite enceinte,
où ladite machine électrique tournante (15) comporte au moins un élément d'obturation (50) fixé sur le palier (21) pour obturer au moins partiellement une desdites ouvertures (472) du palier (21), **caractérisée en ce que** ledit élément d'obturation (50) s'étend au moins en partie dans une épaisseur de l'ouverture (472) correspondante, **en ce que** l'élément d'obturation (50) comporte une paroi de base (51) de laquelle sont issus au moins deux bras (52) délimitant un espace de passage (55) de la sortie de phase (26), **en ce que** les bras (52) sont monoblocs avec la paroi de base (51) et **en ce que** l'élément d'obturation (50) comporte des faces latérales chanfreinées (70).

2. Machine électrique tournante selon la revendication 1, **caractérisée en ce que** la paroi de base (51) est située du côté de la périphérie externe du palier (21).

3. Machine électrique tournante selon l'une quelconque des revendications 1 et 2, **caractérisée en ce que** l'espace de passage (55) est ouvert du côté opposé à la paroi de base (51) de l'élément d'obturation (50).

4. Machine électrique tournante selon l'une quelconque des revendications 1 à 3, **caractérisée en ce que** l'élément d'obturation (50) comporte au moins trois bras (52), deux bras (52) consécutifs délimitant un espace de passage (55) d'une sortie de phase (26).

5. Machine électrique tournante selon l'une quelconque des revendications 1 à 4, **caractérisée en ce que** les bras (52) s'étendent axialement dans l'ouverture (472).

6. Machine électrique tournante selon l'une quelconque des revendications 1 à 5, **caractérisée en ce que** l'élément d'obturation (50) comporte des rainures de rigidification (71).

7. Machine électrique tournante selon l'une quelconque des revendications 1 à 6, **caractérisée en ce que** l'élément d'obturation (50) est réalisé dans un matériau plastique.

8. Machine électrique tournante selon l'une quelconque des revendications 1 à 7, **caractérisée en ce qu'**un dispositif anti-rebouclage de flux d'air (74) est positionné entre le palier (21) et un dissipateur thermique (32).

9. Machine électrique tournante selon la revendication précédente **caractérisée en ce que** le dispositif anti-rebouclage positionnée contre la face externe du flasque du palier (21) tournée du côté opposé au rotor (16).

10. Machine électrique tournante selon l'une quelconque des revendications 8 et 9, **caractérisée en ce que** le dispositif anti-rebouclage de flux d'air (74) est une plaque (74) de forme annulaire, de préférence formée d'une matière plastique pour permettre une isolation électrique entre le dissipateur thermique 32 et le palier 21.

11. Machine électrique tournante selon l'une quelconque des revendications 8 à 10, **caractérisée en ce que** la plaque (74) comporte des ouvertures permettant le passage des sorties de phase (26) à travers ladite plaque.

12. Machine électrique tournante selon l'une quelconque des revendications 1 à 11, **caractérisée en ce que** les ouvertures (472) sont axiales et **en ce que** le palier (21) comporte des ouvertures latérales (471) pour le passage de l'air qui se trouvent dans le prolongement des ouvertures (472) permettant le passage des sorties de phase (26).

13. Machine électrique tournante selon l'une quelconque des revendications 1 à 12, **caractérisée en ce que** les éléments d'obturation (50) sont insérés à l'intérieur des ouvertures (472) correspondantes suivant un déplacement axial (A4).

14. Machine électrique tournante selon l'une quelconque des revendications 1 à 13, **caractérisée en ce que** la machine comportant également un module électronique de puissance comportant un pont redresseur et onduleur.

## Patentansprüche

1. Rotierende elektrische Maschine (15), umfassend:
- einen auf einer Welle (17) mit einer Achse (X) montierten Rotor (16),
- einen Stator (18), der den Rotor (16) umgibt, wobei ein Luftspalt zwischen der äußeren Peripherie des Rotors (16) und der inneren Peripherie des Stators (18) vorhanden ist, wobei der Stator eine Wicklung mit Phasenausgängen (26) aufweist,
- ein Lager (21), das Öffnungen (472) aufweist, die den Durchgang der Phasenausgänge (26) ermöglichen, und
- einen Lüfter (38), der am Rotor (16) der Maschine befestigt ist und einen Luftstrom erzeugt, der in das Gehäuse der rotierenden elektrischen Maschine eintritt und aus dem genannten Gehäuse austritt,
wobei die genannte rotierende elektrische Maschine (15) mindestens ein Verschlusselement (50) aufweist, das am Lager (21) befestigt ist, um mindestens teilweise eine der genannten Öffnungen (472) des Lagers (21) zu verschließen, **dadurch gekennzeichnet, dass** das genannte Verschlusselement (50) sich mindestens teilweise in einer Dicke der entsprechenden Öffnung (472) erstreckt, dass das Verschlusselement (50) eine Grundwand (51) aufweist, von der mindestens zwei Arme (52) ausgehen, die einen Durchgangsraum (55) für den Phasenausgang (26) begrenzen, dass die Arme (52) einteilig mit der Grundwand (51) ausgebildet sind und dass das Verschlusselement (50) abgeschrägte Seitenflächen (70) aufweist.

2. Rotierende elektrische Maschine nach Anspruch 1, **dadurch gekennzeichnet, dass** die Grundwand (51) auf der Seite der äußeren Peripherie des Lagers (21) angeordnet ist.

3. Rotierende elektrische Maschine nach einem der Ansprüche 1 und 2, **dadurch gekennzeichnet, dass** der Durchgangsraum (55) auf der der Grundwand (51) des Verschlusselements (50) gegenüberliegenden Seite offen ist.

4. Rotierende elektrische Maschine nach einem der Ansprüche 1 bis 3, **dadurch gekennzeichnet, dass** das Verschlusselement (50) mindestens drei Arme (52) aufweist, wobei zwei aufeinanderfolgende Arme (52) einen Durchgangsraum (55) für einen Phasenausgang (26) begrenzen.

5. Rotierende elektrische Maschine nach einem der Ansprüche 1 bis 4, **dadurch gekennzeichnet, dass** die Arme (52) sich axial in der Öffnung (472) erstrecken.

6. Rotierende elektrische Maschine nach einem der Ansprüche 1 bis 5, **dadurch gekennzeichnet, dass** das Verschlusselement (50) Versteifungsrillen (71) aufweist.

7. Rotierende elektrische Maschine nach einem der Ansprüche 1 bis 6, **dadurch gekennzeichnet, dass** das Verschlusselement (50) aus einem Kunststoffmaterial hergestellt ist.

8. Rotierende elektrische Maschine nach einem der Ansprüche 1 bis 7, **dadurch gekennzeichnet, dass** eine Luftstrom-Rückführungsverhinderungsvorrichtung (74) zwischen dem Lager (21) und einem Kühlkörper (32) positioniert ist.

9. Rotierende elektrische Maschine nach dem vorhergehenden Anspruch, **dadurch gekennzeichnet, dass** die Rückführungsverhinderungsvorrichtung gegen die äußere Fläche des Lagerflansches (21) positioniert ist, die zur dem Rotor (16) entgegengesetzten Seite gerichtet ist.

10. Rotierende elektrische Maschine nach einem der Ansprüche 8 und 9, **dadurch gekennzeichnet, dass** die Luftstrom-Rückführungsverhinderungsvorrichtung (74) eine ringförmige Platte (74) ist, vorzugsweise aus einem Kunststoffmaterial geformt, um eine elektrische Isolierung zwischen dem Kühlkörper 32 und dem Lager 21 zu ermöglichen.

11. Rotierende elektrische Maschine nach einem der Ansprüche 8 bis 10, **dadurch gekennzeichnet, dass** die Platte (74) Öffnungen aufweist, die den Durchgang der Phasenausgänge (26) durch die genannte Platte ermöglichen.

12. Rotierende elektrische Maschine nach einem der Ansprüche 1 bis 11, **dadurch gekennzeichnet, dass** die Öffnungen (472) axial sind und dass das Lager (21) seitliche Öffnungen (471) für den Luftdurchgang aufweist, die sich in der Verlängerung der Öffnungen (472) befinden, die den Durchgang der Phasenausgänge (26) ermöglichen.

13. Rotierende elektrische Maschine nach einem der Ansprüche 1 bis 12, **dadurch gekennzeichnet, dass** die Verschlusselemente (50) durch eine axiale Bewegung (A4) in die entsprechenden Öffnungen (472) eingesetzt werden.

14. Rotierende elektrische Maschine nach einem der Ansprüche 1 bis 13, **dadurch gekennzeichnet, dass** die Maschine auch ein elektronisches Leistungsmodul umfasst, das eine Gleichrichter- und Wechselrichterbrücke aufweist.

## Claims

1. Rotating electrical machine (15) comprising:
- a rotor (16) mounted on a shaft (17) with axis (X),
- a stator (18) surrounding the rotor (16) with an air gap between the external periphery of the rotor (16) and the internal periphery of the stator (18), the stator having a winding provided with phase outputs (26),
- a bearing (21) comprising openings (472) allowing the passage of phase outputs (26), and
- a fan (38), fixed on the rotor (16) of the machine, allowing the creation of an air current entering the enclosure of the rotating electrical machine and exiting said enclosure,
where said rotating electrical machine (15) comprises at least one sealing element (50) fixed on the bearing (21) to at least partially seal one of said openings (472) of the bearing (21), **characterized in that** said sealing element (50) extends at least partly into a thickness of the corresponding opening (472), **in that** the sealing element (50) comprises a base wall (51) from which at least two arms (52) extend delimiting a passage space (55) for the phase output (26), **in that** the arms (52) are monobloc with the base wall (51) and **in that** the sealing element (50) comprises chamfered lateral faces (70).

2. Rotating electrical machine according to claim 1, **characterized in that** the base wall (51) is located on the side of the external periphery of the bearing (21).

3. Rotating electrical machine according to any one of claims 1 and 2, **characterized in that** the passage space (55) is open on the side opposite to the base wall (51) of the sealing element (50).

4. Rotating electrical machine according to any one of claims 1 to 3, **characterized in that** the sealing element (50) comprises at least three arms (52), two consecutive arms (52) delimiting a passage space (55) for a phase output (26).

5. Rotating electrical machine according to any one of claims 1 to 4, **characterized in that** the arms (52) extend axially in the opening (472).

6. Rotating electrical machine according to any one of claims 1 to 5, **characterized in that** the sealing element (50) comprises stiffening grooves (71).

7. Rotating electrical machine according to any one of claims 1 to 6, **characterized in that** the sealing element (50) is made of a plastic material.

8. Rotating electrical machine according to any one of claims 1 to 7, **characterized in that** an anti-recirculation device for air flow (74) is positioned between the bearing (21) and a heat sink (32).

9. Rotating electrical machine according to the preceding claim **characterized in that** the anti-recirculation device is positioned against the external face of the flange of the bearing (21) turned towards the side opposite to the rotor (16).

10. Rotating electrical machine according to any one of claims 8 and 9, **characterized in that** the anti-recirculation device for air flow (74) is an annular plate (74), preferably formed of a plastic material to allow electrical insulation between the heat sink 32 and the bearing 21.

11. Rotating electrical machine according to any one of claims 8 to 10, **characterized in that** the plate (74) comprises openings allowing the passage of phase outputs (26) through said plate.

12. Rotating electrical machine according to any one of claims 1 to 11, **characterized in that** the openings (472) are axial and **in that** the bearing (21) comprises lateral openings (471) for the passage of air which are in the extension of the openings (472) allowing the passage of phase outputs (26).

13. Rotating electrical machine according to any one of claims 1 to 12, **characterized in that** the sealing elements (50) are inserted inside the corresponding openings (472) following an axial displacement (A4).

14. Rotating electrical machine according to any one of claims 1 to 13, **characterized in that** the machine also comprises an electronic power module comprising a rectifier and inverter bridge.
